# EUROPÄISCHE PATENTSCHRIFT

(11) **EP 4 311 902 B1**
(45) Veröffentlichungstag und Bekanntmachung des Hinweises auf die Patenterteilung: **21.10.2026**
(21) Anmeldenummer: 23188058.4
(22) Anmeldetag: 27.07.2023
(51) Int. Cl.: E05B 81/86, H02J 7/34

(54) **NOTENTRIEGELUNGSVORRICHTUNG**
EMERGENCY UNLOCKING DEVICE
DISPOSITIF DE DÉVERROUILLAGE D'URGENCE

(30) Priorität: 28.07.2022 DE 102022118909
(43) Veröffentlichungstag der Anmeldung: 31.01.2024
(73) Patentinhaber: Kiekert AG, 42579 Heiligenhaus (DE)
(72) Erfinder: KLOCKE, Tobias, 40822 Mettmann (DE)
(74) Vertreter: Kiekert AG Patentabteilung

(56) Entgegenhaltungen:
- DE-A1- 102019 122 109
- DE-T5- 112020 002 502
- IT-A1- TO20 121 144

## Beschreibung

Die Erfindung betrifft ein Notentriegelungsvorrichtung für eine mittels einer elektrischen Türverriegelung verriegelbaren Kraftfahrzeugtür, mit einem Energiespeicher, einem Hilfsenergiespeicher, einem Gleichspannungswandler als Spannungsverstärker und einem elektromechanischen Aktuator zum Entriegeln der Kraftfahrzeugtür.

Elektrische Türverriegelungen in Kraftfahrzeugen dienen z.B zum Steuern des Öffnens und des Schließens von Fahrzeugtüren. Solche elektrischen Türverriegelungen weisen in der Regel keine mechanische Verbindung zu einem Außen- oder Innentürgriff auf. Stattdessen wird die Tür durch einen elektromechanischen Aktuator freigegeben, und zwar auf der Grundlage eines Signals, das von einem Schalter herrührt. Ein solcher Schalter kann z.B. an einem Türgriff an der Tür vorgesehen sein, die geöffnet bzw. geschlossen werden soll. Der elektromechanische Aktuator ist typischerweise elektrisch mit der Hauptbatterie des Fahrzeugs (häufig eine 12 V-Batterie) verbunden.

Im Gegensatz zu mechanischen Türverriegelung von Kraftfahrzeugen stellt es bei elektrischen Türverriegelung ein Problem dar, dass ein Öffnen bzw. Schließen der Tür elektrische Energie erfordert. Eine Unterbrechung oder ein Bruch der elektrischen Verbindung zwischen der Hauptbatterie und dem elektromechanischen Aktuator, z.B. im Falle eines Unfalls, führt also dazu, dass sich die Tür mit der elektrischen Türverriegelung nicht mehr regulär öffnen lässt.

Es ist daher üblich, eine Reserveenergiequelle für elektrischen Türverriegelung vorzusehen, um die Tür auch bei einer Unterbrechung der elektrischen Verbindung zwischen der Hauptbatterie und der elektrischen Türverriegelung öffnen zu können. So beschreibt z.B. die DE 10 2016 219 467 A1 eine elektrische Verriegelung für ein Verschlusssystem eines Kraftfahrzeugs und ein Verfahren zum Betreiben derselben, wobei die elektrische Verriegelung einen Verriegelungsmechanismus mit einer Klinke und einer Ratsche, einen Anzugmechanismus mit einem Anzughebel und einen elektrischen Betätigungsmechanismus zur Betätigung des Anzughebels umfasst. Die elektrische Verriegelung umfasst ferner eine Steuereinheit, die durch eine auf Versorgungsquelle gespeist wird und eine Steuerschaltung aufweist, die den Betrieb des Betätigungsmechanismus steuert, um die Position des Anzughebels zu beeinflussen, und eine Reserveenergiequelle, die Leistung an die Steuerschaltung und den Betätigungsmechanismus liefert, falls eine Fehlerbedingung in der Versorgungsquelle auftritt. Die elektrische Verriegelung ist dazu ausgebildet, den Anzughebel in eine nicht angezogene Ruheposition in Abhängigkeit von einem Schalten der Leistung von der Hauptversorgungsquelle zu der Reserveenergiequelle zurückzuführen.

Aus der DE 10 2009 122 109 A1 ist eine Notentriegelungsvorrichtung mit einem Energiespeicher, einem Hilfsenergiespeicher und einem elektromechanischen Aktuator zum Entriegeln einer Kraftfahrzeugtür bekannt, wobei der Hilfsenergiespeicher dazu vorgesehen ist, den elektromechanischen Aktuator im aufgeladenen Zustand mit Energie zu versorgen, wobei der Hilfsenergiespeicher Kondensatoren aufweist, welche zum Aufladen parallel und im Anschluss an den Ladevorgang des elektromechanischen Aktuators in Reihe geschaltet werden. Aus der DE 11 2020 002 502 T5 ist bekannt, zwischen zwei Notenergiequellen mit unterschiedlichen Ladungsspannungen Hochsetzsteller einzusetzen.

Ausgehend von dieser Situation ist es die Aufgabe der vorliegenden Erfindung, eine verbesserte Notentriegelungsvorrichtung für eine Kraftfahrzeugtür anzugeben.

Die Lösung der Aufgabe erfolgt erfindungsgemäß durch die Merkmale der Gegenstände der unabhängigen Ansprüche. Vorteilhafte Ausgestaltungen sind in den Unteransprüchen angegeben.

Die Erfindung geht aus von einer Notentriegelungsvorrichtung für eine mittels einer elektrischen Türverriegelung verriegelbare Kraftfahrzeugtür,
mit einem Energiespeicher, einem zwei Kondensatoren aufweisenden Hilfsenergiespeicher, einem Gleichspannungswandler als Spannungsverstärker und einem elektromechanischen Aktuator zum Entriegeln der Kraftfahrzeugtür, wobei
der Hilfsenergiespeicher über den Gleichspannungswandler mit dem Energiespeicher verbunden ist, so dass der Hilfsenergiespeicher aus dem Energiespeicher mit der vom Gleichspannungswandler ausgegebenen Spannung ladbar ist,
der elektromechanische Aktuator mit dem Hilfsenergiespeicher derart verbunden ist, dass der Aktuator mittels der durch den Hilfsenergiespeicher im aufgeladenen Zustand bereitgestellten Energie versorgbar ist, und
der Hilfsenergiespeicher eine solche Beschaltung seiner Kondensatoren aufweist, dass die Kondensatoren bei der Aufladung parallel geschaltet sind und im Anschluss an den Ladevorgang zum Versorgen des Aktuators mit elektrischer Energie in Reihe geschaltet werden. Erfindungsgemäss ist parallel zu der Schaltung, die den elektromechanischen Aktuator zum Antreiben einer Notentriegelungsvorrichtung für die Kraftfahrzeugtür über den Hilfsenergiespeicher und den Gleichspannungswandler mit dem Energiespeicher verbindet, eine Schaltung mit einem weiteren Gleichspannungswandler zum Versorgen einer weiteren elektrischen oder elektronischen Einrichtung vorgesehen ist. Auf diese Weise wird eine spezifische Spannungsaufbereitung für den Aktuator und eine Spannungsaufbereitung für eine weitere elektrische oder elektronische Einrichtung, wie ein Digitalteil, vorzugsweise einen Mikrocontroller, bereitgestellt.

Es ist somit ein maßgeblicher Aspekt der Erfindung, den niedrigen Strom, der typischerweise mittels eines für eine Notentriegelungsvorrichtung verwendeten Energiespeichers zur Verfügung steht (z.B. 500 mA aus einer CR123A 3V-Batterie) über den Gleichspannungswandler auf eine höhere Spannung umzusetzen. Zum Beispiel ist die angesprochene 3V-Batterie in ihrem Grenzbereich nur noch mit 1,5 V und 500 mA nutzbar. Der elektromechanische Aktuator muss allerdings typischerweise mit mindestens 3 V und 1 A betrieben werden. Nun ist es grundsätzlich möglich, die Energie aus der Batterie mit einem Gleichspannungswandler auf mindestens 3 V zu wandeln. Hiermit würde man langsam, typischerweise mit einem Eingangsstrom am Gleichspannungswandler, der nicht über 500 mA liegt, einen Kondensator laden. Dieser Vorgang dauert typischerweise 5 bis 10 Sekunden. Gemäß der Erfindung ist nun aber vorgesehen, anstelle von nur einem Kondensator zwei zueinander parallel geschaltete Kondensatoren zu laden. Sobald diese geladen sind, werden die beiden Kondensator von parallel in Reihe geschaltet. Hierdurch erhält man eine höhere Spannung, die dann auf den Aktuator entladen werden kann.

Ein Gleichspannungswandler ist eine Ladungspumpe, bei der die Eingangsspannung eine Gleichspannung ist. Als Ladungspumpe (englisch "charge pump") werden elektrische Schaltungen bezeichnet, die elektrische Spannungen im Wert vergrößern oder Gleichspannungen in der Polarität umkehren. Die Ausgangsspannung einer Ladungspumpe ist immer eine Gleichspannung. Ladungspumpen kommen ohne magnetische Bauelemente wie Spulen oder Transformatoren aus. Ladungspumpen transportieren die elektrische Ladung mit Hilfe von elektrischen Kondensatoren und durch periodische Umschaltung mit Schaltern, womit unterschiedlich hohe elektrische Ausgangsspannungen erzeugt werden können. Ladungspumpen kommen, wie vorliegend, dort als Spannungswandler zum Einsatz, wo keine großen Ausgangströme erforderlich sind oder wo keine geeigneten magnetischen Bauelemente, wie Spulen, eingesetzt werden können.

Grundsätzlich können die beiden Kondensatoren des Hilfsenergiespeichers unterschiedliche Arten von Kondensatoren sein. Vorzugsweise sind diese Kondensatoren jedoch Superkondensatoren. Superkondensatoren (englisch "supercapacitors") werden auch Ultrakondensatoren genannt und sind elektrochemische Kondensatoren und damit eine Weiterentwicklung der Doppelschichtkondensatoren. Im Vergleich zu Akkumulatoren gleichen Gewichts weisen Superkondensatoren nur etwa 10 % deren Energiedichte auf, allerdings ist ihre Leistungsdichte etwa zehn- bis hundertmal größer. Superkondensatoren können deshalb sehr viel schneller ge- und entladen werden. Sie überstehen außerdem sehr viel mehr Schaltzyklen als Akkumulatoren und eignen sich deshalb als Ersatz von Akkumulatoren oder als Ergänzung zu Akkumulatoren, wenn eine große Schaltbeanspruchungen gefordert wird. Damit sind Superkondensatoren bestens geeignet, um im vorliegenden Fall elektrische Energie zur Versorgung des elektromechanischen Aktuators zum Entriegeln der Kraftfahrzeugtür bereitzustellen.

Es ist grundsätzlich denkbar, die beiden Kondensatoren unterschiedlich auszugestalten. Gemäß einer bevorzugten Weiterbildung der Erfindung sind die beiden Kondensatoren jedoch identisch ausgestaltet. Dies vereinfacht den Betrieb beim parallelen Laden der Kondensatoren.

Der weitere Gleichspannungswandler ist vorzugsweise als Ladungspumpe zur Gleichspannungsverdopplung ausgestaltet.

Als Energiespeicher können unterschiedliche Komponenten eingesetzt werden. Vorzugsweise ist der Energiespeicher eine Lithium-Batterie, ganz besonders bevorzugt eine zylindrische 3V-Lithium-Batterie.

Weiter wird ein Verfahren zur Notentriegelung einer mittels einer elektrischen Türverriegelung verriegelbaren Kraftfahrzeugtür bereitgestellt, mit folgenden Verfahrensschritten:
Beaufschlagen eines Gleichspannungswandlers mit der von einem Energiespeicher ausgegebenen Spannung und Laden eines zwei Kondensatoren aufweisenden Hilfsenergiespeichers mit der vom Gleichspannungswandler ausgegebenen Spannung bis die beiden Kondensatoren geladen sind, während die beiden Kondensatoren parallel geschaltet sind, und nachfolgend
in Reihe Schalten der beiden Kondensatoren und Versorgen eines Aktuators mit der von den beiden Kondensatoren im aufgeladenen Zustand bereitgestellten Energie und Antreiben einer Notentriegelungsvorrichtung für die Kraftfahrzeugtür durch den Aktuator, um die Kraftfahrzeugtür zu entriegeln, während die beiden Kondensatoren in Reihe geschaltet sind. Erfindungsgemäss ist parallel zu der Schaltung, die den elektromechanischen Aktuator zum Antreiben einer Notentriegelungsvorrichtung für die Kraftfahrzeugtür über den Hilfsenergiespeicher und den Gleichspannungswandler mit dem Energiespeicher verbindet, eine Schaltung mit einem weiteren Gleichspannungswandler zum Versorgen einer weiteren elektrischen oder elektronischen Einrichtung vorgesehen ist.

Grundsätzlich ist es möglich, den Aktuator nur mit der von den beiden Kondensatoren im aufgeladenen Zustand bereitgestellten Energie zu versorgen. Gemäß einer bevorzugten Weiterbildung der Erfindung erfolgt das Versorgen des Aktuators mit der von den beiden Kondensatoren im aufgeladenen Zustand bereitgestellten Energie jedoch unterstützt durch den Gleichspannungswandler.

Außerdem ist gemäß einer bevorzugten Weiterbildung der Erfindung vorgesehen, dass in Parallelschaltung zu der Versorgung des elektromechanischen Aktuators über den Hilfsenergiespeicher und den Gleichspannungswandler die weitere elektrische oder elektronische Einrichtung über den weiteren Gleichspannungswandler aus dem Energiespeicher mit elektrischer Energie versorgt wird.

Weitere Vorteile und Ausgestaltungen des erfindungsgemäßen Verfahrens ergeben sich für den Fachmann in Analogie zu den Ausführungsformen der weiter oben beschriebenen Notentriegelungsvorrichtung.

Nachfolgend wird die Erfindung unter Bezugnahme auf die anliegenden Zeichnungen anhand eines bevorzugten Ausführungsbeispiels näher erläutert. Es gilt jedoch der Grundsatz, dass die Ausführungsbeispiele die Erfindung nicht beschränken, sondern lediglich mögliche Ausführungsformen darstellen.

Es zeigen
- Fig. 1: schematisch eine Notentriegelungsvorrichtung gemäß einem bevorzugten Ausführungsbeispiel der Erfindung,
- Fig. 2: einen elektrischen Schaltplan für den Hilfsenergiespeicher gemäß dem bevorzugten Ausführungsbeispiel aus Fig. 1 und
- Fig. 3: schematisch ein weiteres Ausführungsbeispiel der Erfindung, bei der eine Schaltung mit einem weiteren Gleichspannungswandler zum Versorgen einer weiteren elektrischen oder elektronischen Einrichtung vorgesehen ist.

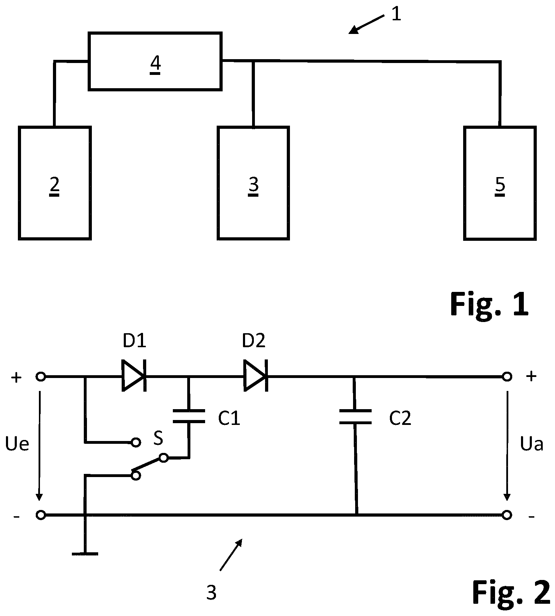

Fig. 1 zeigt schematisch eine Notentriegelungsvorrichtung 1 für eine mittels einer elektrischen Türverriegelung verriegelbaren Kraftfahrzeugtür gemäß einem bevorzugten Ausführungsbeispiel der Erfindung. Die Notentriegelungsvorrichtung 1 weist einen Energiespeicher 2, einen Hilfsenergiespeicher 3, einen Gleichspannungswandler 4 als Spannungsverstärker und einen elektromechanischen Aktuator 5 zum Entriegeln der Kraftfahrzeugtür auf. Dabei ist der Hilfsenergiespeicher 3 über den Gleichspannungswandler 4 mit dem Energiespeicher 2 verbunden, so dass der Hilfsenergiespeicher 3 aus dem Energiespeicher 2 mit der vom Gleichspannungswandler 4 ausgegebenen Spannung geladen werden kann. Im Übrigen ist der elektromechanische Aktuator 5 mit dem Hilfsenergiespeicher 3 verbunden, so dass der Aktuator 5 mittels der durch den Hilfsenergiespeicher 3 bereitgestellten Energie versorgt werden kann. Der Energiespeicher 2 ist vorliegend als zylindrische 3V-Lithium-Batterie ausgestaltet und kann insbesondere eine CR123A 3V-Batterie sein.

Der Hilfsenergiespeicher 3 ist nun aufgebaut, wie in Fig. 2 dargestellt. Der Hilfsenergiespeicher 3 weist zwei identische Kondensatoren C1 und C2 auf, die mittels eines Schalters S in einem ersten Zustand parallel zueinander und in einem zweiten Zustand in Reihe miteinander geschaltet werden können. Die Kondensatoren C1 und C2 sind als Superkondensatoren ausgestaltet. Die Eingangsspannung des Hilfsenergiespeichers 3 ist mit Ue bezeichnet und die Ausgangsspannung mit Ua. Im Übrigen sind, wie in Fig. 2 dargestellt, zwei miteinander in Reihe geschaltete, zueinander identische Dioden D1 und D2 vorgesehen, so dass insgesamt der folgende Betrieb des Hilfsenergiespeichers 3 ermöglicht wird:

In dem ersten Zustand wird der Hilfsenergiespeicher 3 geladen. Dazu ist der Schalter so geschaltet, wie in Fig. 2 dargestellt, so dass die beiden Kondensator C1 und C2 parallel zueinander geschaltet sind. Diese werden über die beide Dioden D1 und D2 aufgeladen und zwar jeweils auf einen Wert Ue - Ud, wobei die Spannung Ud die Flussspannung bezeichnet, also den Spannungsabfall über einer jeweiligen Diode D1 bzw. D2. Sind die beiden Kondensatoren voll aufgeladen, wird der Schalter S nach oben geschaltet, so dass die beiden Kondensatoren C1 und C2 nun in Reihe liegen, so dass der Hilfsenergiespeicher 3 an seinem Ausgang eine Ausgangsspannung Ua zur Verfügung stellt, für die gilt Ua = 2 Ue - 2 Ud. Mit dieser Spannung wird nun der Aktuator beaufschlagt, so dass die Kraftfahrzeugtüre entriegelt werden kann. Das Versorgen des Aktuators 5 mit der von den beiden Kondensatoren C1 und C2 im aufgeladenen Zustand bereitgestellten Energie wird dabei durch den Gleichspannungswandler 4 unterstützt.

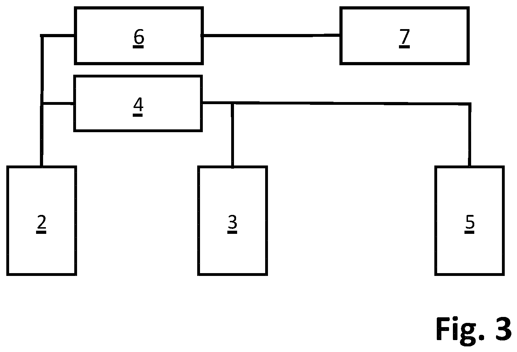

Aus Fig. 3 ist nun schematisch ein weiteres Ausführungsbeispiel der Erfindung ersichtlich. Die dort gezeigte Notentriegelungsvorrichtung ist aufgebaut, wie die in Fig. 1 gezeigte Notentriegelungsvorrichtung. Allerdings ist vorliegend parallel zu der Schaltung, die den elektromechanischen Aktuator 5 über den Hilfsenergiespeicher 3 und den Gleichspannungswandler 4 mit dem Energiespeicher 1 verbindet, eine Schaltung mit einem weiteren Gleichspannungswandler 6 zum Versorgen einer weiteren elektrischen oder elektronischen Einrichtung 7 vorgesehen. Dabei ist der weitere Gleichspannungswandler 6 als Ladungspumpe zur Gleichspannungsverdopplung ausgestaltet, und die weitere elektronische Einrichtung ist ein Digitalteil, nämlich ein Mikrocontroller. Damit wird in kompakter Form eine spezifische Spannungsaufbereitung für den Aktuator 5 und zusätzlich eine Spannungsaufbereitung für den Mikrocontroller bereitgestellt.

### Bezugszeichenliste

- 1: Notentriegelungsvorrichtung
- 2: Energiespeicher
- 3: Hilfsenergiespeicher
- 4: Gleichspannungswandler
- 5: elektromechanischer Aktuator
- 6: weiterer Gleichspannungswandler
- 7: weitere elektrische oder elektronische Einrichtung
- C1: Kondensator
- C2: Kondensator
- D1: Diode
- D2: Diode
- S: Schalter

## Patentansprüche

1. Notentriegelungsvorrichtung (1) für eine mittels einer elektrischen Türverriegelung verriegelbaren Kraftfahrzeugtür,
mit einem Energiespeicher (2), einem zwei Kondensatoren (C1, C2) aufweisenden Hilfsenergiespeicher (3), einem Gleichspannungswandler (4) als Spannungsverstärker und einem elektromechanischen Aktuator (5) zum Entriegeln der Kraftfahrzeugtür, wobei
der Hilfsenergiespeicher (3) über den Gleichspannungswandler (4) mit dem Energiespeicher (2) verbunden ist, so dass der Hilfsenergiespeicher (3) aus dem Energiespeicher (2) mit der vom Gleichspannungswandler (4) ausgegebenen Spannung ladbar ist,
der elektromechanische Aktuator (5) mit dem Hilfsenergiespeicher (3) derart verbunden ist, dass der Aktuator (5) mittels der durch den Hilfsenergiespeicher (3) im aufgeladenen Zustand bereitgestellten Energie versorgbar ist, und
der Hilfsenergiespeicher (3) eine solche Beschaltung seiner Kondensatoren (c1, C2) aufweist, dass die Kondensatoren (C1, C2) bei der Aufladung parallel geschaltet sind und im Anschluss an den Ladevorgang zum Versorgen des Aktuators (5) mit elektrischer Energie in Reihe geschaltet werden,
wobei
parallel zu der Schaltung, die den elektromechanischen Aktuator (5) zum Entriegeln der Kraftfahrzeugtür über den Hilfsenergiespeicher (3) und den Gleichspannungswandler (4) mit dem Energiespeicher (2) verbindet, eine Schaltung mit einem weiteren Gleichspannungswandler (6) zum Versorgen einer weiteren elektrischen oder elektronischen Einrichtung (7) vorgesehen ist.

2. Notentriegelungsvorrichtung (1) nach Anspruch 1, wobei die beiden Kondensatoren (C1, C2) Superkondensatoren sind.

3. Notentriegelungsvorrichtung (1) nach Anspruch 1 oder 2, wobei die beiden Kondensatoren (C1, C2) identisch ausgestaltet sind.

4. Notentriegelungsvorrichtung (1) nach einem der vorhergehenden Ansprüche, wobei der weitere Gleichspannungswandler (6) als Ladungspumpe zur Gleichspannungsverdopplung ausgestaltet ist.

5. Notentriegelungsvorrichtung (1) nach einem der vorhergehenden Ansprüche, wobei die weitere elektronische Einrichtung (7) ein Digitalteil, vorzugsweise ein Mikrocontroller, ist.

6. Notentriegelungsvorrichtung (1) nach einem der vorhergehenden Ansprüche, wobei der Energiespeicher (2) eine Lithium-Batterie ist, vorzugsweise eine zylindrische 3V-Lithium-Batterie.

7. Verfahren zur Notentriegelung einer mittels einer elektrischen Türverriegelung verriegelbaren Kraftfahrzeugtür, mit folgenden Verfahrensschritten:
Beaufschlagen eines Gleichspannungswandlers (4) mit der von einem Energiespeicher (2) ausgegebenen Spannung und Laden eines zwei Kondensatoren (C1, C2) aufweisenden Hilfsenergiespeichers (3) mit der vom Gleichspannungswandler (4) ausgegebenen Spannung bis die beiden Kondensatoren (C1, C2) geladen sind, während die beiden Kondensatoren (C1, C2) parallel zueinander geschaltet sind, und nachfolgend
in Reihe Schalten der beiden Kondensatoren (C1, C2) und Versorgen eines elektromechanischen Aktuators (5) mit der von den beiden Kondensatoren (C1, C2) im aufgeladenen Zustand bereitgestellten Energie und Antreiben einer Notentriegelungsvorrichtung für die Kraftfahrzeugtür durch den Aktuator (5), um die Kraftfahrzeugtür zu entriegeln, während die beiden Kondensatoren (C1, C2) zueinander in Reihe geschaltet sind,
wobei parallel zu der Schaltung, die den elektromechanischen Aktuator (5) zum Entriegeln der Kraftfahrzeugtür über den Hilfsenergiespeicher (3) und den Gleichspannungswandler (4) mit dem Energiespeicher (2) verbindet, eine Schaltung mit einem weiteren Gleichspannungswandler (6) zum Versorgen einer weiteren elektrischen oder elektronischen Einrichtung (7) vorgesehen ist.

8. Verfahren nach Anspruch 7, wobei das Versorgen des Aktuators (5) mit der von den beiden Kondensatoren (C1, C2) im aufgeladenen Zustand bereitgestellten Energie unterstützt durch den Gleichspannungswandler (4) erfolgt.

9. Verfahren nach Anspruch 7 oder 8, wobei in Parallelschaltung zu der Versorgung des elektromechanischen Aktuators (5) über den Hilfsenergiespeicher (3) und den Gleichspannungswandler (4) die weitere elektrische oder elektronische Einrichtung (7) über den weiteren Gleichspannungswandler (6) aus dem Energiespeicher (2) mit elektrischer Energie versorgt wird.

## Claims

1. Emergency unlocking device (1) for a motor vehicle door that can be locked by means of an electric door lock,
comprising an energy storage device (2), an auxiliary energy storage device (3) having two capacitors (C1, C2), a DC-DC converter (4) as a voltage amplifier and an electromechanical actuator (5) for unlocking the motor vehicle door, wherein
the auxiliary energy storage device (3) is connected to the energy storage device (2) via the DC-DC converter (4), so that the auxiliary energy storage device (3) can be charged from the energy storage device (2) with the voltage output by the DC-DC converter (4),
the electromechanical actuator (5) is connected to the auxiliary energy storage device (3) in such a way that the actuator (5) can be supplied by means of the energy provided by the auxiliary energy storage device (3) in the charged state, and
the auxiliary energy storage device (3) has such a connection of its capacitors (c1, C2) that the capacitors (C1, C2) are connected in parallel during charging and are connected in series after the charging process to supply the actuator (5) with electrical energy, wherein a circuit with a further DC-DC converter (6) for supplying a further electrical or electronic device (7) is provided in parallel to the circuit which connects the electromechanical actuator (5) for unlocking the motor vehicle door to the energy storage device (2) via the auxiliary energy storage device (3) and the DC-DC converter (4).

2. Emergency unlocking device (1) according to claim 1, wherein the two capacitors (C1, C2) are supercapacitors.

3. Emergency unlocking device (1) according to claim 1 or 2, wherein the two capacitors (C1, C2) are identically designed.

4. Emergency unlocking device (1) according to any of the preceding claims, wherein the further DC-DC converter (6) is designed as a charge pump for DC voltage doubling.

5. Emergency unlocking device (1) according to any of the preceding claims, wherein the further electronic device (7) is a digital part, preferably a microcontroller.

6. Emergency unlocking device (1) according to any of the preceding claims, wherein the energy storage device (2) is a lithium battery, preferably a cylindrical 3V lithium battery.

7. Method for the emergency unlocking of a motor vehicle door that can be locked by means of an electric door lock, comprising the following method steps:
applying the voltage output by an energy storage device (2) to a DC-DC converter (4) and charging an auxiliary energy storage device (3) having two capacitors (C1, C2) with the voltage output by the DC-DC converter (4) until the two capacitors (C1, C2) are charged, while the two capacitors (C1, C2) are connected in parallel to each other, and subsequently
connecting the two capacitors (C1, C2) in series and supplying an electromechanical actuator (5) with the energy provided by the two capacitors (C1, C2) in the charged state and driving an emergency unlocking device for the motor vehicle door by the actuator (5) in order to unlock the motor vehicle door, while the two capacitors (C1, C2) are connected in series to each other, wherein in parallel to the circuit which connects the electromechanical actuator (5) for unlocking the motor vehicle door to the energy storage device (2) via the auxiliary energy storage device (3) and the DC-DC converter (4), a circuit with a further DC-DC converter (6) for supplying a further electrical or electronic device (7) is provided.

8. Method according to claim 7, wherein the actuator (5) is supplied with the energy provided by the two capacitors (C1, C2) in the charged state, supported by the DC-DC converter (4).

9. Method according to claim 7 or 8, wherein, in parallel connection to the supply of the electromechanical actuator (5) via the auxiliary energy storage device (3) and the DC-DC converter (4), the further electrical or electronic device (7) is supplied with electrical energy from the energy storage device (2) via the further DC-DC converter (6).

## Revendications

1. Dispositif de déverrouillage d'urgence (1) pour une portière de véhicule automobile pouvant être verrouillée au moyen d'un verrouillage de portière électrique,
comportant un accumulateur d'énergie (2), un accumulateur d'énergie auxiliaire (3) présentant deux condensateurs (C1, C2), un convertisseur continu-continu (4) comme amplificateur de tension et un actionneur électromécanique (5) pour le déverrouillage de la portière de véhicule automobile, dans lequel
l'accumulateur d'énergie auxiliaire (3) est connecté à l'accumulateur d'énergie (2) par l'intermédiaire du convertisseur continu-continu (4) de sorte que l'accumulateur d'énergie auxiliaire (3) peut être chargé à partir de l'accumulateur d'énergie (2) avec la tension délivrée par le convertisseur continu-continu (4),
l'actionneur électromécanique (5) est connecté à l'accumulateur d'énergie auxiliaire (3) de telle sorte que l'actionneur (5) peut être alimenté au moyen de l'énergie fournie par l'accumulateur d'énergie auxiliaire (3) à l'état chargé, et
l'accumulateur d'énergie auxiliaire (3) présente un circuit de ses condensateurs (c1, C2) tel que les condensateurs (C1, C2) sont montés en parallèle lors de la charge et sont montés en série à la suite du processus de charge pour l'alimentation de l'actionneur (5) en énergie électrique, dans lequel, en parallèle du circuit qui connecte l'actionneur électromécanique (5) destiné à déverrouiller la portière de véhicule automobile à l'accumulateur d'énergie (2) par l'intermédiaire de l'accumulateur d'énergie auxiliaire (3) et du convertisseur continu-continu (4), un circuit comportant un autre convertisseur continu-continu (6) est prévu pour l'alimentation d'un autre appareil électrique ou électronique (7).

2. Dispositif de déverrouillage d'urgence (1) selon la revendication 1, dans lequel les deux condensateurs (C1, C2) sont des supercondensateurs.

3. Dispositif de déverrouillage d'urgence (1) selon la revendication 1 ou 2, dans lequel les deux condensateurs (C1, C2) sont de conception identique.

4. Dispositif de déverrouillage d'urgence (1) selon l'une des revendications précédentes, dans lequel l'autre convertisseur continu-continu (6) est configuré comme une pompe de charge pour le doublage de tension continue.

5. Dispositif de déverrouillage d'urgence (1) selon l'une des revendications précédentes, dans lequel l'autre appareil électronique (7) est une pièce numérique, de préférence un microdispositif de commande.

6. Dispositif de déverrouillage d'urgence (1) selon l'une des revendications précédentes, dans lequel l'accumulateur d'énergie (2) est une batterie lithium, de préférence une batterie lithium 3 V cylindrique.

7. Procédé pour le déverrouillage d'urgence d'une portière de véhicule automobile pouvant être verrouillée au moyen d'un verrouillage de portière électrique, comportant les étapes de procédé suivantes :
sollicitation d'un convertisseur continu-continu (4) avec la tension délivrée par un accumulateur d'énergie (2) et charge d'un accumulateur d'énergie auxiliaire (3) présentant deux condensateurs (C1, C2) avec la tension délivrée par le convertisseur continu-continu (4) jusqu'à ce que les deux condensateurs (C1, C2) soient chargés, tandis que les deux condensateurs (C1, C2) sont montés en parallèle l'un à l'autre, et ensuite
montage en série des deux condensateurs (C1, C2) et alimentation d'un actionneur électromécanique (5) avec l'énergie fournie par les deux condensateurs (C1, C2) à l'état chargé et entraînement d'un dispositif de déverrouillage d'urgence de la portière de véhicule automobile par l'actionneur (5) afin de déverrouiller la portière de véhicule automobile pendant que les deux condensateurs (C1, C2) sont montés en série l'un par rapport à l'autre, dans lequel, en parallèle du circuit qui connecte l'actionneur électromécanique (5) destiné à déverrouiller la portière de véhicule automobile à l'accumulateur d'énergie (2) par l'intermédiaire de l'accumulateur d'énergie auxiliaire (3) et du convertisseur continu-continu (4), un circuit comportant un autre convertisseur continu-continu (6) est prévu pour l'alimentation d'un autre appareil électrique ou électronique (7).

8. Procédé selon la revendication 7, dans lequel l'alimentation de l'actionneur (5) avec l'énergie fournie par les deux condensateurs (C1, C2) à l'état chargé est effectuée de manière assistée par le convertisseur continu-continu (4).

9. Procédé selon la revendication 7 ou 8, dans lequel, en montage parallèle à l'alimentation de l'actionneur électromécanique (5) par l'intermédiaire de l'accumulateur d'énergie auxiliaire (3) et du convertisseur continu-continu (4), l'autre appareil électrique ou électronique (7) est alimenté en énergie électrique par l'intermédiaire de l'autre convertisseur continu-continu (6) à partir de l'accumulateur d'énergie (2).
